# EUROPEAN PATENT APPLICATION

(11) **EP 1 613 086 A2**
(43) Date of publication of application: **04.01.2006**
(21) Application number: 05254000.2
(22) Date of filing: 28.06.2005
(51) Int. Cl.: H04N 7/16, H04N 5/445

(54) **System and method for displaying a warning message**

(30) Priority: 28.06.2004 KR 2004048930
(71) Applicant: SAMSUNG ELECTRONICS CO., LTD., Suwon-si Gyeonggi-do 442-742 (KR)
(72) Inventor: Oh, Sung-Bo, Yeongtong-Gu Suwon-Si Gyeonggi-do (KR)
(74) Representative: Waddington, Richard

(57) **Abstract**

A system and method for displaying a warning message are disclosed. The system for displaying the warning message includes a display device for displaying digital image signal, and a host apparatus for providing the digital image signal and determining whether the display device supports a prescribed encryption standard adopted by the host apparatus, wherein when it is determined that the display device does not support the encryption standard, the host apparatus causes the encryption standard non-support warning message associated with the display device to be displayed on the display device. It is possible to easily see when the display device supports the encryption standard adopted by the host apparatus.

## Description

The present invention generally relates to a system and method for displaying a warning message, and more specifically to a system and method for displaying a warning message in which the digital image signal supplied from a host apparatus is displayed on a display device.

With the development of technology for processing information, as content such as characters, songs, image data is recorded, reproduced, transmitted, and received in digital format, the legal protection questions for such a content have significantly emerged. Unlike the analog format, content of a digital format is not subjected to degradation of quality caused by replicating data. Therefore, associated cost of replication is not required with digital content, and the time and cost required in the transmission and distribution is minimal.

Accordingly, infringement of rights for the digital content have often arisen, and hence, many researches for the digital content protection have been conducted. As the field that has being actively researched at present, an encryption scheme may be included.

The encryption scheme is a scheme of encrypting a digital content itself, and as with HDCP (Highbandwidth Digital Contents Protection). There is also a scheme in which the illegal replication and reproduction of the digital content are prevented by determining if a prescribed encryption standard is supported between a host apparatus such as DVDP (Digital Video Disk Player) and a display device such as a digital TV.

Meanwhile the conventional system includes a method adopting a prescribed encryption standard between devices, referred to as the latter scheme, the method for reproducing digital content, especially, digital image signal is as follows:

First, when a host apparatus supplying digital image signal and a display device displaying the supplied digital image signal are connected via an interface such as DVI (Digital Visual Interface), the encryption key (Key Select Vector) according to a prescribed encryption standard is transmitted to the display device from the host apparatus. Then, based on the transmitted encryption key, the display device generates a combined encryption key. The combined encryption key is generated differently for each encryption standard, and the generating method is known in the art. The generated combined encryption key is transmitted back to the host apparatus, and then the host apparatus interprets the combined encryption key and determines whether the display device includes a decryption function, that is, whether the display device supports a prescribed encryption standard. When it is determined that the display device supports the prescribed encryption standard, the host apparatus causes the digital image signal to be displayed. When it is determined that the display device does not support the prescribed encryption standard, the host apparatus prevents the digital image signal from being displayed.

Thus, when it is determined that the display device does not support the prescribed encryption standard, a white noise or a monochromatic color depending upon the setting, is displayed on the screen of the display device instead of the digital image signal.

In such a conventional case, since the display device does not support the prescribed encryption standard, and the white noise or the monochromatic color is displayed on the screen of the display device, the user having no expert knowledge on the relevant art may associate the white noise or the monochromatic color as, for example, a failure of the host apparatus, a failure of the display device, a failure of connecting cable, or a condition faulty of image source such as DVD. Accordingly, these are often problems for which the user inquires of a service center or a service technician to repair.

The present invention provides a warning message displaying system and displaying method that can display an encryption standard non-support warning message on a display device, when the display device does not support a prescribed encryption standard adopted by a host apparatus.

Additional aspects and/or advantages of the invention will be set forth in part in the description which follows and, in part, will be apparent from the description, or may be learned by practice of the invention.

According to the present invention there is provided an apparatus and method as set forth in the appended claims. Preferred features of the invention will be apparent from the dependent claims, and the description which follows.

According to an aspect of the present invention there is provided a warning message displaying system including a display device to display a digital image signal, and a host apparatus to provide the digital image signal and to determine whether the display device supports a prescribed encryption standard adopted by the host apparatus, wherein when it is determined that the display device does not support the prescribed encryption standard, the host apparatus causes the encryption standard non-support warning message associated with the display device to be displayed on the display device.

According to another aspect of the present invention there is provided a method for displaying a digital image signal supplied from a host apparatus on a display device, the method including determining whether the display device supports a prescribed encryption standard adopted by the host apparatus, and displaying an encryption standard non-support warning message associated with the display device on the display device when the display device does not support the prescribed encryption standard.

In accordance with the present invention, it is possible to easily see if the display device supports encryption standard adopted by a host apparatus (i.e., an optical recording/reproducing apparatus).

For a better understanding of the invention, and to show how embodiments of the same may be carried into effect, reference will now be made, by way of example, to the accompanying diagrammatic drawings in which:
FIG. 1 is a block diagram of a warning message displaying system according to an embodiment of the present invention;
FIG. 2 is a flow chart illlustrating a warning message displaying method according to an embodiment of the present invention; and
FIG. 3 is a flow chart illustrating a warning message displaying method according to another embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

The matters defined in the description such as a detailed construction and elements are provided to assist in a comprehensive understanding of the invention. Thus, it is apparent that the present invention can be carried out without those defined matters. Also, well-known functions or constructions are not described in detail since they would obscure the invention in unnecessary detail.

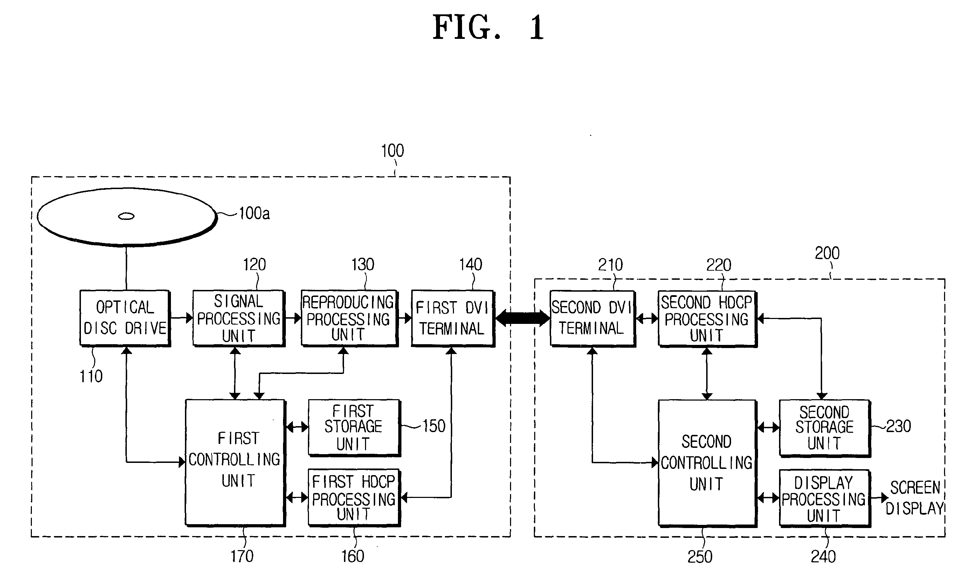

FIG. 1 is a block diagram of the system for displaying a warning message according to an embodiment of the present invention. The system for displaying a warning message according to the present invention comprises a host apparatus 100(i.e., an optical recording/reproducing apparatus) providing digital image signal and a display device 200 displaying the digital image signal supplied from the host apparatus 100.

For convenience of explanation, hereinafter, there will be described the explanation on which an optical recording/reproducing apparatus is applied as the host apparatus 100, HDCP standard is applied as an encryption standard, and DVI is applied as an interface. The scope of the present invention, however, is not limited hereto.

The host apparatus 100 comprises an optical disc drive 110, a signal processing unit 120, a reproducing processing unit 130, a first DVI terminal 140, a first storage unit 150, a first HDCP processing unit 160 and a first controlling unit 170.

The host apparatus 100 is an apparatus that processes digital image signal recorded on an optical disc 100a into a reproducible signal and then provides it to a display device 200. The host apparatus 100 may include, for example, DVDP and DVR (Digital Video Recorder), and the optical disc 100a may include, for example, DVD and CD.

The optical disc drive 110 detects the digital image signal recorded on the optical disc 100a by using a pick-up (not shown). The pick-up (not shown) converts the digital image signal detected from the optical disc 100a into an RF signal. The signal processing unit 120 amplifies the RF signal, converts the RF signal into an electrical signal, and then digitizes the converted electrical signal. The reproducing processing unit 130 converts the digital image signal recorded on the optical disc 100a or hard disk drive (HDD) (not shown) into a visible signal and outputs it. Also, the reproducing processing unit 130 synthesizes a main-image such as moving image, and sub-image such as a title and outputs the synthesized image. The data outputted from the reproducing processing unit 130 is transmitted to the display device 200 via a transmission cable (not shown) and displayed thereon. The first DVI terminal 140 is connected to the display device 200 via a transmission cable (not shown) and serves as an interface for transmitting/receiving data related to the reproduction.

The first storage unit 150 stores control programs to control and to manage general operations of the host apparatus 100. In accordance with an embodiment of the present invention, the first storage unit 150 stores the encryption key (Key select Vector) according to HDCP standard adopted by the host apparatus 100. Also, HDCP standard non-support warning message data is previously stored on the first storage unit 150.

The first HDCP processing unit 160 processes the result of determining whether the display device 200 connected with the host apparatus 100 supports HDCP standard or not and the matters associated with it. In accordance with the present invention, under the control of the first controlling unit 170, the first HDCP processing unit 160 causes a previously stored encryption key to be read-out before transmitting the digital image signal, and causes the read-out encryption key to be transmitted to the display device 200 via the first and second DVI terminals 140 and 210. Also, the first HDCP processing unit 160 determines whether the display device 200 is a device that supports HDCP standard based on a combined encryption key transmitted from the display device 200.

The first controlling unit 170 controls general operations of the host apparatus 100, depending on the signal generated from a user input unit (not shown) or a remote controller (not shown) and the control program stored on the first storage unit 150. As the result of the determination by the first HDCP processing unit 160, when it is determined that the display device 200 supports HDCP standard, the first controlling unit 170 causes the digital image signal stored on the optical disc 100a to be displayed on the display device 200 by controlling the optical disc drive 110, the signal processing unit 120, the reproducing processing unit 130, for example.

On the other hand, as the result of the determination by the first HDCP processing unit 160, when it is determined that the display device 200 does not support HDCP standard, the first controlling unit 170 reads-out HDCP standard non-support warning message data that is previously stored on the first storage unit 150 and causes the read-out HDCP standard non-support warning message data to be transmitted via the first and second DVI terminals 140 and 210 to the display device 200. Also, in accordance with an embodiment of the present invention, as the result of the determination by the first HDCP processing unit 160, when it is determined that the display device 200 does not support HDCP standard, the first controlling unit 170 causes HDCP standard non-support identifying signal to be generated, and the generated HDCP standard non-support identifying signal to be transmitted via the first and second DVI terminals 140 and 210 to the display device 200, thereby causing HDCP standard non-support warning message to be displayed on the display device 200.

Also, the display device 200, according to an embodiment of the present invention comprises a second DVI terminal 210, a second HDCP processing unit 220, a second storage unit 230, a display processing unit 240, and a second controlling unit 250. The display device 200 may be a digital TV, for example.

The second DVI terminal 210 is connected to the host apparatus 100 via a transmission cable (not shown) and serves as an interface for transmitting/receiving data related to the reproduction.

The second HDCP processing unit 220 processes, under the control of the second controlling unit 250, the result of determining whether the display device 200 connected to the host apparatus 100 supports HDCP standard and associated matters. In accordance with the present invention, the second HDCP processing unit 220 generates a combined encryption key based on the encryption key transmitted from the host apparatus 100.

The second storage unit 230 stores control programs to control and manage general operations of the display device 200. Also, in accordance with another embodiment of the present invention, the second storage unit 230 may store HDCP standard non-support warning message data.

Under the control of the second controlling unit 250, the display processing unit 240 performs a prescribed signal processing procedure on the digital image signal transmitted from the host apparatus 100, and causes the result of the performance to be displayed on the screen of the display device 200.

The second controlling unit 250 controls general operations of the display device 200, depending on the signal generated from a user input unit (not shown) or a remote controller (not shown) and the control program stored on the second storage unit 230.

The second controlling unit 250 according to an embodiment of the present invention, where the first and second DVI terminals 140 and 210 are not interconnected in a initial screen, causes a message requesting 'confirmation for DVI terminal connection' to be displayed through the display processing unit 240.

As a result of the determination by the host apparatus 100, where the display device 200 supports HDCP standard, the second controlling unit 250 causes the digital image signal transmitted from the host apparatus 100 to be displayed.

As a result of the determination by the host apparatus 100, when the display device 200 does not support HDCP standard, the second controlling unit 250 causes HDCP standard non-support warning message to be displayed on the screen of the display device 200.

HDCP standard non-support warning message displayed on the screen of the display device 200 may be based on HDCP standard non-support warning message data transmitted from the host apparatus 100, and may be based on HDCP standard non-support warning message data stored on the second storage unit 230 depending on the embodiments.

In a case where HDCP standard non-support warning message data is transmitted from the host apparatus 100, the second controlling unit 250 causes HDCP standard non-support warning message to be displayed on the screen of the display device 200 via the display processing unit 240, based on HDCP standard non-support warning message data transmitted from the host apparatus 100.

Meanwhile, in a case where HDCP standard non-support identifying signal is transmitted from the host apparatus 100, the second controlling unit 250 causes HDCP standard non-support warning message data stored on the second storage unit 230 to be read-out, and based on the read-out HDCP standard non-support warning message data, HDCP standard non-support warning message to be displayed on the screen of the display device 200 by means of the display processing unit 240.

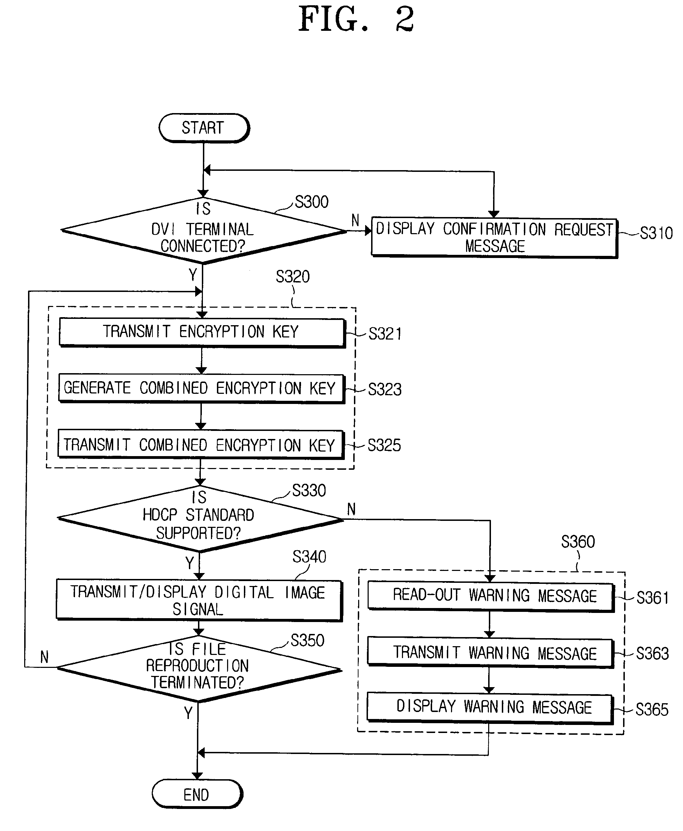

FIG. 2 is a flow chart illustrating a warning message displaying method according to an embodiment of the present invention. In the embodiment of FIG. 2, HDCP standard non-support warning message data is stored on the first storage unit 150 of the host apparatus 100.

Referring to FIGs. 1 and 2, in operation 300, it is confirmed that the first and second DVI terminals 140 and 210 are not interconnected. Here, it is desirable that the confirmation for the interconnection is performed by checking HotPlug. When it is confirmed that the interconnection is not performed in operation 300, the process moves to operation 310, where the message requesting 'confirmation for DVI terminal connection' is displayed on the screen of the display device 200.

When it is determined in operation 300, that the first and second DVI terminals 140 and 210 are interconnected the process moves to operation 320, where the first HDCP processing unit 160, under the control of the first controlling unit 170, performs the process of determining whether the display device 200 supports HDCP standard.

From operation 320, the process moves to operation 321, where the encryption key according to HDCP standard is transmitted to the display device 200 from the host apparatus 100. From operation 321, the process moves to operation 323, where the display device 200 generates a combined encryption key based on the transmitted encryption key. From operation 323, the process moves to operation 324, where the generated combined encryption key is transmitted to the host apparatus 100 from the display device 200.

From operation 325, the process moves to operation 330, where the host apparatus 100 determines whether the decryption is possible, that is, the display device 200 supports HDCP standard, based on the transmitted combined encryption key.

As a result of the determination in the operation 330, the process moves to operation 340, where in a case of supporting HDCP standard, the digital image signal is transmitted to the display device 200 from the host apparatus 100, and the transmitted digital image signal is displayed on the screen of the display device 200 (. On the other hand, the process of determining whether the display device 200 supports HDCP standard is performed once every two seconds. Accordingly, from operation 340, the process moves to operation 350, where it is determined whether the reproduction on the file to be reproduced including the digital image signal that is under reproduction is terminated. As a result of the determination, when the reproduction on the file to be reproduced is not terminated, operations 330 to 350 are repeated until the reproduction on the file to be reproduced is terminated.

When the result of the determination in operation 330, in a case of not supporting HDCP standard, from operation 330, the process moves to operation 360, where HDCP standard non-support warning message is displayed on the screen of the display device 200.

As a result of the operation 330, when the display device 200 does not support HDCP standard, the process moves to operation 361, where the first controlling unit 170 reads-out HDCP standard non-support warning message data stored on the first storage unit 150. From operation 361, the process moves to operation 363, where the read-out HDCP standard non-support warning message data is transmitted via the first and second DVI terminals 140 and 210 to the display device 200. From operation 363, the process moves to operation 365. where based on the transmitted HDCP standard non-support warning message data, HDCP standard non-support warning message is displayed on the screen of the display device 200.

Therefore, the user can perceive the current interconnection state of the host apparatus 100 and the display device 200, that is, the fact that the display device 200 does not support HDCP standard.

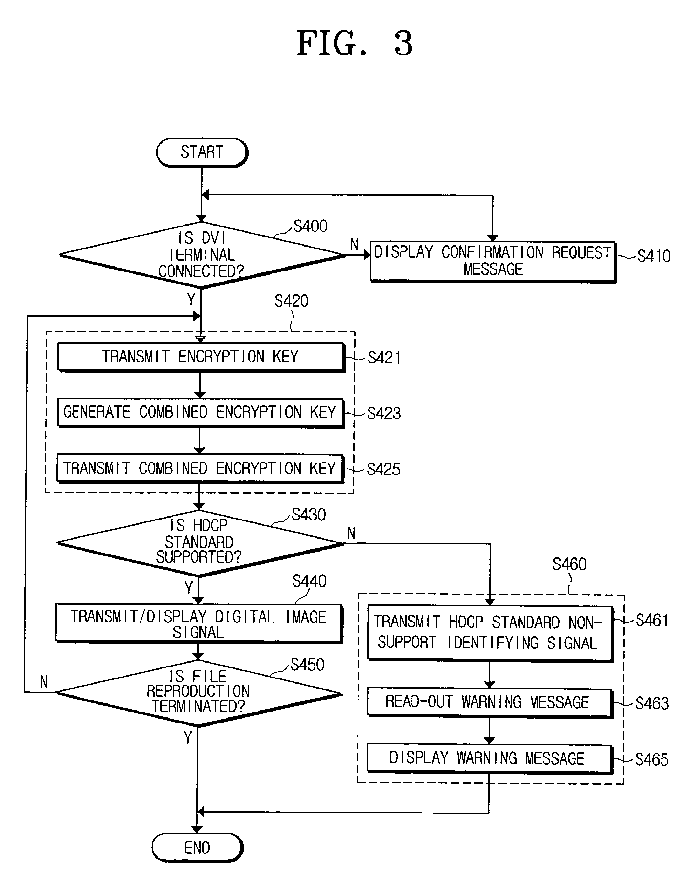

FIG. 3 is a flow chart illustrating a warning message displaying method according to another embodiment of the present invention. In the embodiment of FIG. 3, HDCP standard non-support warning message data is stored on the second storage unit 230 of the display device 200.

Since the operation 410 to operation 450 are similar to operation 310 to operation 350 in FIG. 2, the description thereof will be omitted. Thus, for convenience of explanation, only the portions different from those of the embodiment in FIG. 2 will be described below.

With reference to FIGs. 1 and 3, in operation 430, it is determined whether the display device 200 supports HDCP standard, as a result of the determination, when it is determined that the display device 200 does not support HDCP standard in operation 430, the process moves to operation 460, where an HDCP standard non-support warning message is displayed on the display device 200.

As a result of the determination in operation 430, when it is determined that the display device 200 does not support HDCP standard, in operation 461, the first controlling unit 170 generates HDCP standard non-support identifying signal and sends it to the display device 200. From operation 461, the process moves to operation 463, where the second controlling unit 250 reads-out HDCP standard non-support warning message data stored on the second storage unit 230 based on the transmitted HDCP standard non-support identifying signal. From operation 463, the process moves to operation 465 and based on the read-out HDCP standard non-support warning message data, HDCP standard non-support warning message is displayed on the screen of the display device 200.

Accordingly, the user can perceive the current interconnection state of the optical recording/reproducing apparatus 100 and the display device 200, that is, the fact that the display device 200 does not support HDCP standard.

As described above, in accordance with the present invention, it is possible to easily see if whether the display device supports the encryption standard adopted by the optical recording/reproducing apparatus. Therefore, even through the user has no expert knowledge on the optical recording/reproducing apparatus and the display device, it is possible to easily comprehend causes such as a white noise, and hence there is provided an advantage that a proper measure to meet pertinent situations can be conducted as soon as possible.

The foregoing embodiment and advantages are merely exemplary and are not to be construed as limiting the present invention. The present teaching can be readily applied to other types of apparatuses.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A system for displaying a warning message, comprising:
a display device to display a digital image signal; and
a host apparatus to provide the digital image signal and to determine whether the display device supports a prescribed encryption standard adopted by the host apparatus,
wherein when it is determined that the display device does not support the encryption standard, the host apparatus causes an encryption standard non-support warning message associated with the display device to be displayed on the display device.

2. The system as recited in claim 1, wherein the host apparatus comprises:
a storage unit to store encryption standard non-support warning message data;
an encryption processing unit to determine whether the display device supports the prescribed encryption standard; and
a controlling unit to cause the stored encryption standard non-support warning message data to be read-out, and the read-out encryption standard non-support warning message data to be sent to the display device, when it is determined by the encryption processing unit that the display device does not support the prescribed encryption standard.

3. The system as recited in claim 1, wherein the host apparatus comprises:
an encryption processing unit to determine if the display device supports the encryption standard; and
a controlling unit to cause an encryption standard non-support identifying signal to be generated and the generated encryption standard non-support identifying signal to be sent to the display device, if it is determined by the encryption processing unit that the display device does not support the encryption standard.

4. The system as recited in claim 3, wherein the display device comprises:
a storage unit to store encryption standard non-support warning message data; and
a controlling unit to cause the stored encryption standard non-support warning message data to be read-out, and the read-out encryption standard non-support warning message to be displayed, based on the transmitted encryption standard non-support identifying signal.

5. The system as recited in any preceding claim, wherein the prescribed encryption standard comprises HDCP (Highbandwidth Digital Contents Protection).

6. A method for displaying digital image signal supplied from a host apparatus on a display device, the method comprising:
determining whether the display device supports a prescribed encryption standard adopted by the host apparatus; and
when it is determined that the display device does not support the encryption standard, displaying an encryption standard non-support warning message associated with the display device on the display device.

7. The method as recited in claim 6, wherein the determining whether the display device supports the prescribed encryption standard adopted by the host apparatus, comprises:
transmitting an encryption key (key select vector) according to the prescribed encryption standard to the display device from the host apparatus;
generating a combined encryption key based on the transmitted encryption key in the display device;
transmitting the generated combined encryption key to the host apparatus from the display device; and
determining in the host apparatus, whether the display device supports the prescribed encryption standard based on the transmitted combined encryption key.

8. The method as recited in claim 6, wherein the displaying of the encryption standard non-support warning message comprises:
reading-out the encryption standard non-support warning message data that is previously stored on the host apparatus, when it is determined that the display device does not support the prescribed encryption standard;
transmitting the read-out encryption standard non-support warning message data to the display device from the host apparatus; and
displaying the encryption standard non-support warning message on the display device, based on the transmitted encryption standard non-support warning message data.

9. The method as recited in claim 6, wherein the displaying of the encryption standard non-support warning message comprises:
generating an encryption standard non-support identifying signal to transmit the generated encryption standard non-support identifying signal to the display device from the host apparatus, when it is determined that the display device does not support the prescribed encryption standard;
reading-out the encryption standard non-support warning message data that is stored previously on the display device, based on the transmitted encryption standard non-support identifying signal; and
displaying the encryption standard non-support warning message on the display device, based on the read-out encryption standard non-support warning message data.

10. The method as recited in any one of claims 6 to 9, wherein the prescribed encryption standard comprises HDCP (Highbandwidth Digital Contents Protection).
